(19) Europäisches Patentamt
European Patent Office
Office européen des brevets

(11) **EP 4 786 505 A1**

(12) **EUROPEAN PATENT APPLICATION**

(43) Date of publication:
**05.08.2026 Bulletin 2026/32**

(21) Application number: **25154918.4**

(22) Date of filing: **30.01.2025**

(51) International Patent Classification (IPC):
***C08F 210/16*** *(2006.01)* ***C08F 4/659*** *(2006.01)*
***C08L 23/0807*** *(2025.01)*

(52) Cooperative Patent Classification (CPC):
(C-Sets available)
**C08F 210/16; C08L 23/0815;** C08F 4/65912;
C08F 4/65916; C08F 2420/07; C08L 2205/025
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **BURYAK, Andrey**
  **4021 Linz (AT)**
- **POMAKHINA, Elena**
  **4021 Linz (AT)**
- **AHO, Jani**
  **06101 Porvoo (FI)**
- **KALLIO, Kalle**
  **06850 Kulloo (FI)**

(74) Representative: **Maiwald GmbH**
**Elisenhof**
**Elisenstraße 3**
**80335 München (DE)**

(54) **BIMODAL POLYETHYLENE**

(57) A polyethylene (PE) comprising:
a) a first polyethylene fraction (PEI) being a copolymer of ethylene and one or more comonomers selected from the group consisting of Cs-Cs alpha olefins, and
b) a second polyethylene fraction (PE2) being a copolymer of ethylene and one or more comonomers selected from the group consisting of Cs-Cs alpha olefins,

wherein the second polyethylene fraction (PE2) has an intrinsic viscosity value (iV), determined according to ISO 1628-1:2021 and ISO 1628-3:2010, in decalin at 135 °C, and a total comonomer content value (Co), determined according to quantitative $^{13}$C-NMR spectroscopic analysis, that fulfil inequation (I):

$$Co(PE2) - iV(PE2) \geq A \qquad (I)$$

wherein the intrinsic viscosity (iV) is expressed in dL/g and the comonomer (Co) content is expressed in mol-%, and wherein A is 1.00.

EP 4 786 505 A1



**(Cont. next page)**

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815;**
C08F 210/16, C08F 210/08, C08F 2500/17,
C08F 2500/27;
C08F 210/16, C08F 210/08, C08F 2500/17,
C08F 2500/27, C08F 2500/26, C08F 2500/35,
C08F 2500/33, C08F 2500/02, C08F 2500/05

## Description

### Field of the Invention

The present invention is directed to a polyethylene comprising both a first and a second polyethylene fraction, wherein the second polyethylene fraction is defined by a comonomer content/intrinsic viscosity balance that is not obtainable for unimodal polyethylenes, as well as to a method of producing such polyethylenes and compositions comprising said polyethylenes.

### Background to the Invention

Polyethylenes may be produced through the use of metal catalysts (e.g. single site catalysts or Ziegler-Natta catalysts) or via free-radical initiated chain polymerization processes. Free-radical initiated polymerization processes yield polyethylenes with high degrees of long chain branching, known as low density polyethylenes (LDPE). Metal catalyzed processes produce polyethylene that is substantially free from long chain branching, being classified as, for example, high density polyethylenes (HDPE), medium density polyethylenes (MDPE), or linear low density polyethylenes (LLDPE), with the density predominantly controlled by the content of short chain branches, which are typically introduced by the addition of comonomers, such as alpha olefin comonomers.

When Ziegler-Natta catalysts are employed in the synthesis of polyethylenes in slurry reactors, there is generally a limit to the comonomer content at a given molecular weight (with molecular weight often represented by a proxy, such as melt flow rate or intrinsic viscosity), with high comonomer content at low molecular weight particularly difficult to obtain. Single site catalysts, in particular metallocene-based catalysts are able to incorporate a higher comonomer content than Ziegler-Natta catalysts, there is still a limit to this ability, especially at low molecular weights. Attempts to incorporate higher amounts of comonomer in the conditions typically used for the production of polyethylene, i.e. slurry reactors, typically result in the polymer produced being at least partially soluble in the slurry, leading both to swelling of the polymer fluff produced, causing significant fluctuations in the process control of the reactor necessitating a reactor shutdown to avoid fouling of the reactor, and also further issues in the recovery section where the diluent is separated and evaporated, resulting in problematic polymer deposits. Use of a gas phase reactor can help to attenuate this problem; however, gas phase reactors are typically unable to produce very low molecular weight polyethylene.

As such, there remains a need for polymerization processes that allow for the production of polyethylenes containing fractions having higher amounts of alpha olefin comonomer than would otherwise be obtainable for polyethylene having such a molecular weight, especially in the context of low molecular weight polyethylene fractions.

Summary of the Invention

The present invention is based on the finding that exceptionally high comonomer content can be obtained at low molecular weights in the later polymerization stages of multistage polymerization processes.

As such, in a first aspect, the present invention is directed to a polyethylene (PE) comprising:

a) a first polyethylene fraction (PE1) being a polymer of ethylene and optionally one or more comonomers selected from the group consisting of $C_3$-$C_8$ alpha olefins, and
b) a second polyethylene fraction (PE2) being a copolymer of ethylene and one or more comonomers selected from the group consisting of $C_3$-$C_8$ alpha olefins,

wherein the second polyethylene fraction (PE2) has an intrinsic viscosity value (iV), determined according to ISO 1628-1:2021 and ISO 1628-3:2010, in decalin at 135 °C, and a total comonomer content value (Co), determined according to quantitative $^{13}$C-NMR spectroscopic analysis, that fulfil inequation (I):

$$Co(PE2) - iV(PE2) \geq A \qquad \text{(I)}$$

wherein the intrinsic viscosity (iV) is expressed in dL/g and the comonomer (Co) content is expressed in mol-%, and wherein A is 1.00

In a second aspect, the present invention is directed to a process for producing the polyethylene (PE) of the first aspect, comprising, in the given order, the following steps:

a) providing a single site catalyst (SSC);

b) optionally prepolymerizing the single site catalyst (SSC) in the presence of ethylene and optionally one or more comonomers selected from the group consisting of Cs-Cs alpha olefins in a prepolymerization reactor (R0), thereby producing a prepolymerized single site catalyst (SSC);

c) in the presence of the optionally prepolymerized single site catalyst (SSC), polymerizing ethylene and optionally one or more comonomers selected from the group consisting of $C_3$-$C_8$ alpha olefins in a first polymerization reactor (R1), thereby producing the first polyethylene fraction (PE1); and

d) in the presence of the single site catalyst (SSC) and the first polyethylene fraction (PE1), polymerizing ethylene and one or more comonomers selected from the group consisting of $C_3$-$C_8$ alpha olefins in a second polymerization reactor (R2), thereby producing the second polyethylene fraction (PE2);

e) optionally, in the presence of the single site catalyst (SSC), the first polyethylene fraction (PE1) and the second polyethylene fraction (PE2) polymerizing ethylene and one or more comonomers selected from the group consisting of $C_3$-$C_8$ alpha olefins in one or more further polymerization reactors thereby producing one or more further polyethylene fractions; and

f) compounding the resultant mixture of the single site catalyst (SSC), the first polyethylene fraction (PE1), the second polyethylene fraction (PE2) and the optional further polyethylene fractions, optionally with one or more additives (Ad), thereby obtaining the polyethylene (PE),

wherein the first polymerization reactor (R1) and the second polymerization reactor (R2) are both slurry reactors, more preferably both loop reactors.

In a final aspect, the present invention is directed to a polymer composition (PC) comprising at least 75 wt.-%, relative to the total weight of the polymer composition (PC), of the polyethylene (PE) of the first aspect or obtainable according to the process of the second aspect.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a", "an", and the like refers to one or more.

In the following, amounts are given in % by weight (wt.-%) unless it is stated otherwise.

An ethylene homopolymer is a polymer that essentially consists of ethylene monomer units. Due to impurities especially during commercial polymerization processes, an ethylene homopolymer can comprise up to 0.1 mol-% comonomer units, preferably up to 0.05 mol-% comonomer units and most preferably up to 0.01 mol-% comonomer units.

An ethylene copolymer is a copolymer of ethylene monomer units and comonomer units, preferably selected from $C_3$-$C_8$ alpha-olefins. Ethylene copolymers can comprise comonomer units from one or more comonomers different in their amounts of carbon atoms. In the context of the present invention, the term "copolymer of A and B" means that only units derived from A and B may be present, excluding, for example, terpolymers containing units derived from A, B and C.

An ethylene terpolymer is an ethylene copolymer, as described above, which consists of ethylene and two different comonomer units, typically selected from $C_3$-$C_8$ alpha-olefins.

In the context of the present invention, the term "polyethylene" may refer to ethylene homopolymers, ethylene copolymer, ethylene terpolymers and any other polymer that is at least 50 wt.-% ethylene.

Multimodal polymers are polymers having a multimodal distribution of one or more properties. Multimodal ethylene polymers may typically be multimodal with respect to comonomer content or multimodal with respect to molecular weight (as seen through the melt flow rates of the respective fractions and the final composition).

Bimodal polymers are polymers having a bimodal distribution of one or more properties. Bimodal random ethylene polymers may typically be bimodal with respect to comonomer content or bimodal with respect to molecular weight (as seen through the melt flow rates of the first fraction and the final composition).

The present invention will now be described in more detail.

Figures

Figure 1 is a graph showing the C4 vs iV properties of the key examples. As can be seen, CE1 to CE7 are unimodal polyethylenes wherein the inequation (I) is not fulfilled. CE8 to CE11 are unimodal polyethylenes wherein the inequation (I) is fulfilled. The polymerizations of CE8 to CE11 could not be maintained in a stable manner. The PE2 of IE1 and IE2 fulfilled inequation (I) and could be produced in a stable manner.

Figure 2 is a graph showing the density vs iV properties of the key examples. As can be seen, CE1 to CE7 are

unimodal polyethylenes wherein the inequation (III) is not fulfilled. CE8 to CE11 are unimodal polyethylenes wherein the inequation (III) is in some cases fulfilled (CE9 and CE10 fulfilled, CE8 and CE11 not fulfilled). The polymerizations of CE8 to CE11 could not be maintained in a stable manner. The PE2 of IE1 and IE2 fulfilled inequation (III) and could be produced in a stable manner.

## Detailed Description

In a first aspect, the present invention is directed to a polyethylene (PE) comprising:

a) a first polyethylene fraction (PE1), and
b) a second polyethylene fraction (PE2).

It is preferred that the first polyethylene fraction (PE1) is present in an amount in the range from 30 to 70 wt.-% and the second polyethylene fraction (PE2) is present in an amount in the range from 30 to 70 wt.-%, both relative to the total weight of the polyethylene (PE), more preferably wherein the first polyethylene fraction (PE1) is present in an amount in the range from 40 to 60 wt.-% and the second polyethylene fraction (PE2) is present in an amount in the range from 40 to 60 wt.-%, most preferably wherein the first polyethylene fraction (PE1) is present in an amount in the range from 45 to 55 wt.-% and the second polyethylene fraction (PE2) is present in an amount in the range from 45 to 55 wt.-%.

In one embodiment, the first polyethylene fraction (PE1) is a copolymer of ethylene and a first comonomer selected from the group consisting of $C_3$-$C_8$ alpha olefins and the second polyethylene fraction (PE2) is a copolymer of ethylene and a second comonomer selected from the group consisting of $C_3$-$C_8$ alpha olefins, wherein the first comonomer and the second comonomer are preferably the same, yet more preferably are either both 1-butene or 1-hexene, most preferably are both 1-butene.

In an alternative embodiment, the first polyethylene fraction (PE1) is a homopolymer of ethylene and the second polyethylene fraction (PE2) is a copolymer of ethylene and a comonomer selected from the group consisting of $C_3$-$C_8$ alpha olefins, more preferably selected from 1-butene and 1-hexene, most preferably 1-butene.

## The first polyethylene fraction (PE1)

The first polyethylene fraction (PE1) is a polymer of ethylene and optionally one or more comonomers selected from the group consisting of $C_3$-$C_8$ alpha olefins.

In one embodiment, the first polyethylene fraction (PE1) is a copolymer of ethylene and one comonomer selected from the group consisting of $C_3$-$C_8$ alpha olefins. It is further preferred that the first polyethylene fraction (PE1) is either a copolymer of ethylene and 1-butene or a copolymer of ethylene and 1-hexene. Most preferably, the first polyethylene fraction (PE1) is a copolymer of ethylene and 1-butene.

In another embodiment, the first polyethylene fraction (PE1) is a homopolymer of ethylene.

The first polyethylene fraction (PE1) preferably has an intrinsic viscosity (iV), determined according to ISO 1628-1:2021 and ISO 1628-3:2010, in decalin at 135 °C, in the range from 0.60 to 4.00 dL/g, more preferably in the range from 0.80 to 3.00 dL/g, most preferably in the range from 1.00 to 2.00 dL/g.

The first polyethylene fraction (PE1) preferably has a total comonomer content value (Co), determined according to quantitative $^{13}$C-NMR spectroscopic analysis, in the range from 0.0 to 5.0 mol-%, more preferably in the range from 0.0 to 2.0 mol-%, most preferably in the range from 0.0 to 1.0 mol-%.

The first polyethylene fraction (PE1) preferably has a density, determined according to ISO 1183, in the range from 920 to 970 kg/m$^3$, more preferably in the range from 935 to 965 kg/m$^3$, most preferably in the range from 945 to 960 kg/m$^3$.

The first polyethylene fraction (PE1) preferably has an intrinsic viscosity value (iV), determined according to ISO 1628-1:2021 and ISO 1628-3:2010, in decalin at 135 °C, and comonomer content value (Co), determined according to quantitative $^{13}$C-NMR spectroscopic analysis, that fulfil inequation (II):

$$Co(PE1) - iV(PE1) < B \qquad \text{(II)}$$

wherein the intrinsic viscosity (iV) is expressed in dL/g and the comonomer (Co) content is expressed in mol-%, and wherein B is 1.00, more preferably 0.95, most preferably 0.90.

The first polyethylene fraction (PE1) preferably has an intrinsic viscosity value (iV), determined according to ISO 1628-1:2021 and ISO 1628-3:2010, in decalin at 135 °C, and a density value (dens), determined according to ISO 1183, that fulfil inequation (IV)

$$dens(PE1) + 22 \times iV(PE1) > D \qquad \text{(IV)}$$

wherein the intrinsic viscosity (iV) is expressed in dL/g and the density is expressed in kg/$m^3$, and
wherein D is 955.0, more preferably 955.5, most preferably 956.0.

**The second polyethylene fraction (PE2)**

The second polyethylene fraction (PE2) is a copolymer of ethylene and one or more comonomers selected from the group consisting of $C_3$-$C_8$ alpha olefins.

It is preferred that the second polyethylene fraction (PE2) is a copolymer of ethylene and one comonomer selected from the group consisting of $C_3$-$C_8$ alpha olefins. It is further preferred that the second polyethylene fraction (PE2) is either a copolymer of ethylene and 1-butene or a copolymer of ethylene and 1-hexene. Most preferably, the second polyethylene fraction (PE2) is a copolymer of ethylene and 1-butene.

The second polyethylene fraction (PE2) preferably has an intrinsic viscosity (iV), determined according to ISO 1628-1:2021 and ISO 1628-3:2010, in decalin at 135 °C, in the range from 0.10 to 0.70 dL/g, more preferably in the range from 0.10 to 0.60 dL/g, most preferably in the range from 0.10 to 0.55 dL/g.

The second polyethylene fraction (PE2) preferably has a total comonomer content value (Co), determined according to quantitative $^{13}C$-NMR spectroscopic analysis, in the range from 1.5 to 5.0 mol-%, more preferably in the range from 2.0 to 4.0 mol-%, most preferably in the range from 2.5 to 3.5 mol-%.

The second polyethylene fraction (PE2) preferably has a density, determined according to ISO 1183, in the range from 900 to 950 kg/$m^3$, more preferably in the range from 915 to 945 kg/$m^3$, most preferably in the range from 932 to 942 kg/$m^3$.

The second polyethylene fraction (PE2) has an intrinsic viscosity value (iV), determined according to ISO 1628-1:2021 and ISO 1628-3:2010, in decalin at 135 °C, and a total comonomer content value (Co), determined according to quantitative $^{13}C$-NMR spectroscopic analysis, that fulfil inequation (I):

$$Co(PE2) - iV(PE2) \geq A \qquad \text{(I)}$$

wherein the intrinsic viscosity (iV) is expressed in dL/g and the comonomer (Co) content is expressed in mol-%, and
wherein A is 1.00, more preferably 1.50, yet more preferably 2.20, most preferably 2.30.

The second polyethylene fraction (PE2) preferably has an intrinsic viscosity value (iV), determined according to ISO 1628-1:2021 and ISO 1628-3:2010, in decalin at 135 °C, and a density value (dens), determined according to ISO 1183, that fulfil inequation (III)

$$dens(PE2) + 22 \times iV(PE2) \leq C \qquad \text{(III)}$$

wherein the intrinsic viscosity (iV) is expressed in dL/g and the density is expressed in kg/$m^3$, and
wherein C is 955.0, more preferably 954.0, yet more preferably 953.0, even more preferably 952.0, yet further preferably 951.0, even further preferably 950.0, most preferably 949.0.

**Other fractions**

In addition to the first polyethylene fraction (PE1) and the second polyethylene fraction (PE2), the polyethylene (PE) may comprise further polyethylene fractions.

If the polyethylene (PE) is produced in a multistage polymerization process, a prepolymerization step may be optionally employed. If a prepolymerization reaction occurs, then the prepolymer is assigned to the first polyethylene fraction (PE1), that is the properties of the combination of the prepolymer and the polymer produced in the first polymerization reactor proper are determined. Generally speaking, the amount of prepolymer formed in such processes is less than 5 wt.-% of the total weight of the polyethylene (PE).

Further polymerization steps can be carried out after the production of the first polyethylene fraction (PE1) and the second polyethylene fraction (PE2), producing one or more further polyethylene fractions, for example an optional third polyethylene fraction (PE3), an optional fourth polyethylene fraction (PE4), and so on.

It is preferred that the total weight of the first polyethylene fraction (PE1) and the second polyethylene fraction (PE2) (including the optional prepolymer) is at least 80 wt.-%, more preferably at least 90 wt.-%, yet more preferably at least 95 wt.-%, even more preferably at least 98 wt.-%, of the total weight of the polyethylene (PE). Most preferably, the

polyethylene (PE) consists of the first polyethylene fraction (PE1) and the second polyethylene fraction (PE2) (including the optional prepolymer).

### The polyethylene (PE)

The polyethylene (PE) preferably has an intrinsic viscosity (iV), determined according to ISO 1628-1:2021 and ISO 1628-3:2010, in decalin at 135 °C, in the range from 0.10 to 1.50 dL/g, more preferably in the range from 0.20 to 1.00 dL/g, most preferably in the range from 0.70 to 0.90 dL/g.

The polyethylene (PE) preferably has a total comonomer content value (Co), determined according to quantitative $^{13}C$-NMR spectroscopic analysis, in the range from 0.5 to 5.0 mol-%, more preferably in the range from 1.0 to 3.0 mol-%, most preferably in the range from 1.2 to 2.2 mol-%.

The polyethylene (PE) preferably has a density, determined according to ISO 1183, in the range from 900 to 960 $kg/m^3$, more preferably in the range from 920 to 955 $kg/m^3$, most preferably in the range from 940 to 950 $kg/m^3$.

The polyethylene (PE) preferably has a melting temperature (Tm), determined by differential scanning calorimetry (DSC) according to ISO 11357 / part 3 /method C2, in the range from 110.0 to 140.0 °C, more preferably in the range from 120.0 to 130.0 °C, most preferably in the range from 125.0 to 128.0 °C.

The polyethylene (PE) preferably has a melt enthalpy (ΔHm) determined by differential scanning calorimetry (DSC) according to ISO 11357 / part 3 /method C2, in the range from 150 to 200 J/g, more preferably in the range from 165 to 190 J/g, most preferably in the range from 175 to 185 J/g.

The polyethylene (PE) preferably has a crystallization temperature (Tc), determined by differential scanning calorimetry (DSC) according to ISO 11357 / part 3 /method C2, in the range from 100.0 to 130.0 °C, more preferably in the range from 110.0 to 120.0 °C, most preferably in the range from 114.0 to 117.0 °C.

The polyethylene (PE) preferably has a number average molecular weight (Mn), determined according to the method given in the measurement methods in the range from 4,000 to 10,000 g/mol, more preferably in the range from 4,500 to 9,000 g/mol, most preferably, in the range from 5,000 to 8,000 g/mol.

The polyethylene (PE) preferably has a weight average molecular weight (Mw), determined according to the method given in the measurement methods, in the range from 10,000 to 60,000 g/mol, more preferably in the range from 20,000 to 50,000 g/mol, most preferably, in the range from 30,000 to 40,000 g/mol.

The polyethylene (PE) preferably has a z-average molecular weight (Mz), determined according to the method given in the measurement methods, in the range from 70,000 to 130,000 g/mol, more preferably in the range from 80,000 to 120,000 g/mol, most preferably, in the range from 90,000 to 110,000 g/mol.

The polyethylene (PE) preferably has a molecular weight distribution (Mw/Mn), determined according to the method given in the measurement methods, in the range from 3.0 to 8.0, more preferably in the range from 3.5 to 7.5, most preferably, in the range from 4.0 to 7.0. The polyethylene (PE) preferably has a molecular weight distribution (Mz/Mw), determined according to ASTM D 6474-12, in the range from 2.0 to 5.0, more preferably in the range from 2.3 to 4.0, most preferably, in the range from 2.5 to 3.5.

### The process

In a second aspect, the present invention is directed to a process for producing the polyethylene (PE) of the first aspect, comprising, in the given order, the following steps:

a) providing a single site catalyst (SSC);
b) optionally prepolymerizing the single site catalyst (SSC) in the presence of ethylene and optionally one or more comonomers selected from the group consisting of $C_3$-$C_8$ alpha olefins in a prepolymerization reactor (R0), thereby producing a prepolymerized single site catalyst (SSC);
c) in the presence of the optionally prepolymerized single site catalyst (SSC), polymerizing ethylene and optionally one or more comonomers selected from the group consisting of $C_3$-$C_8$ alpha olefins in a first polymerization reactor (R1), thereby producing the first polyethylene fraction (PE1); and
d) in the presence of the single site catalyst (SSC) and the first polyethylene fraction (PE1), polymerizing ethylene and one or more comonomers selected from the group consisting of $C_3$-$C_8$ alpha olefins in a second polymerization reactor (R2), thereby producing the second polyethylene fraction (PE2);
e) optionally, in the presence of the single site catalyst (SSC), the first polyethylene fraction (PE1) and the second polyethylene fraction (PE2) polymerizing ethylene and one or more comonomers selected from the group consisting of $C_3$-$C_8$ alpha olefins in one or more further polymerization reactors thereby producing one or more further polyethylene fractions; and
f) compounding the resultant mixture of the single site catalyst (SSC), the first polyethylene fraction (PE1), the second polyethylene fraction (PE2) and the optional further polyethylene fractions, optionally with one or more additives (Ad),

thereby obtaining the polyethylene (PE).

The first polymerization reactor (R1) and the second polymerization reactor (R2) are both slurry reactors. More preferably the first polymerization reactor (R1) and the second polymerization reactor (R2) are both loop reactors.

It is preferred that the first polymer of ethylene (A) has been produced in the presence of a single-site catalyst, more preferably a metallocene catalyst, most preferably a metallocene catalyst comprising a metallocene complex (C).

A metallocene catalyst comprises a metallocene complex (C) and a cocatalyst.

The metallocene complex (C) comprises a transition metal (M) of Group 3 to 10 of the Periodic Table (IUPAC 2007) or of an actinide or lanthanide.

The term "a metallocene complex (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the metallocene complex (C) has the following formula (I):

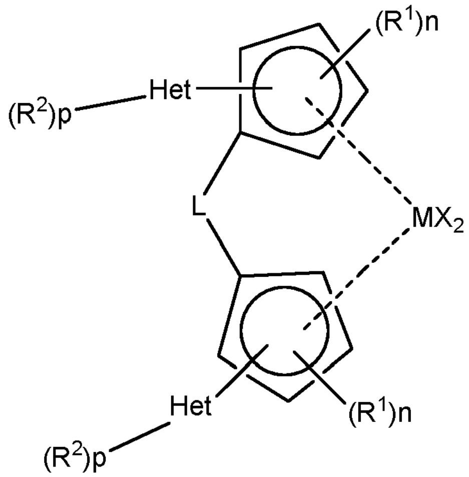

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -$Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

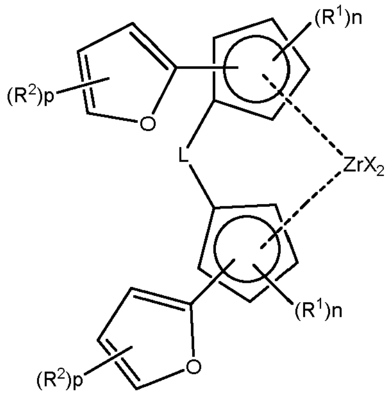

(I′)

wherein each X is independently a halogen atom, a $C_{1-6}$-alkyl group, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a -$Si(R)_3$ alkyl group; each p is 1;
each R is $C_{1-6}$-alkyl or phenyl group.

Highly preferred complexes of formula (I) are

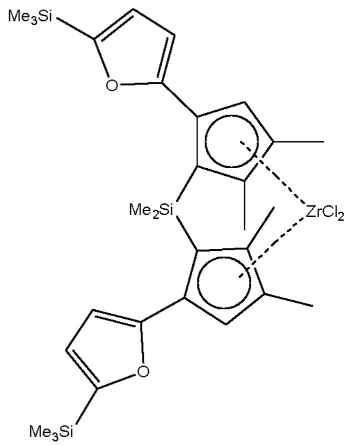

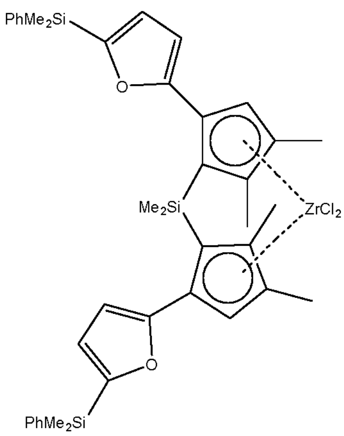

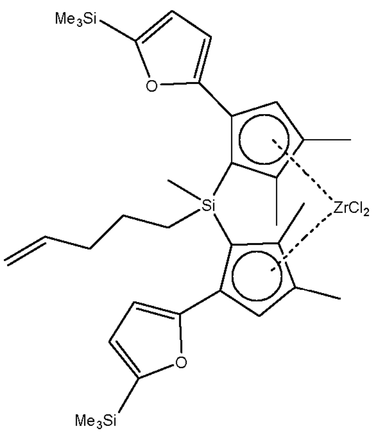

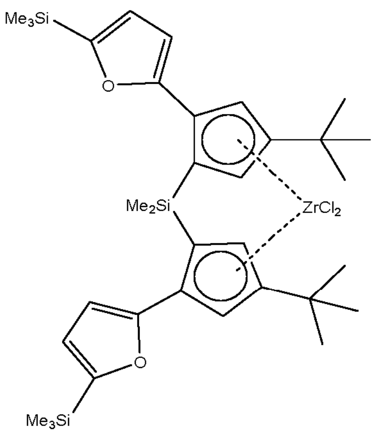

Most preferably the complex dimethylsilanediylbis[2-(5-trimethylsilylfuran-2-yl)-4,5-dimethylcyclopentadien-1-yl] zirconium dichloride is used.

To form a catalyst, a cocatalyst, also known as an activator, is used, as is well known in the art. Cocatalysts comprising Al or B are well known and can be used here. The use of aluminoxanes (e.g. MAO) or boron based cocatalysts

(such as borates) is preferred.

It is particularly preferred that the polyethylene (PE) of the first aspect is produced in the presence of a single site catalyst (SSC), more preferably wherein the single site catalyst (SSC) comprises a metallocene complex (C) and a cocatalyst, wherein the metallocene complex (C) has a structure as described above.

In particularly preferred embodiments, the polyethylene (PE) of the first aspect is obtainable, more preferably obtained, according to the process of the second aspect.

**The polymer composition (PC)**

In a final aspect, the present invention is directed to a polymer composition (PC) comprising at least 75 wt.-%, relative to the total weight of the polymer composition (PC), of the polyethylene (PE) of the first aspect or obtainable according to the process of the second aspect.

Preferably the polymer composition (PC) comprises at least 80 wt.-%, more preferably at least 85 wt.-%, yet more preferably at least 90 wt.-%, even more preferably at least 95 wt.-%, most preferably at least 98 wt.-%, relative to the total weight of the polymer composition.

Other components of the polymer composition may include, but are not limited to, further polyethylenes, polypropylenes, other polyolefins, inorganic fillers, and additive(s) (Ad).

The additive(s) (Ad) are preferably selected from antioxidants, process stabilizers, UV-stabilizers, pigments other than carbon black, fillers, antistatic additives, antiblock agents, nucleating agents, acid scavengers, slip agent, polymer processing agent (PPA) and mixtures thereof.

It is understood that the content of additives (Ad), given with respect to the total weight of the polymer composition (PC), includes any carrier polymers used to introduce the additives to said polymer composition (PC), i.e. masterbatch carrier polymers. An example of such a carrier polymer would be a polyethylene, such as HDPE, LDPE, or LLDPE, in the form of powder.

If present, the content of the further additive(s) is in the range from 0.0 to 10.0 wt.-%, more preferably in the range from 0.0 to 5.0 wt.-%, most preferably in the range from 0.0 to 2.0 wt.-%, relative to the total weight of the polymer composition (PC).

**EXAMPLES**

**1. Measurement methods**

The following definitions of terms and determination methods apply for the above general description of the invention including the claims as well as to the below examples unless otherwise defined.

**Intrinsic viscosity**

The intrinsic viscosity (iV) is measured according to ISO 1628-1:2021 and ISO 1628-3:2010, in decalin at 135 °C.

The intrinsic viscosity of the second polyethylene fraction (PE2) is not measured directly, but can be calculated by using the following mixing rule:

$$iV(PE2) = \frac{iV\ (PE) - \ x \ \times iV(PE1)}{1 - x}$$

wherein iV(PE) is the intrinsic viscosity of the bimodal polyethylene,
iV(PE1) is the intrinsic viscosity of the first polyethylene fraction,
iV(PE2) is the intrinsic viscosity of the second polyethylene fraction, and
*x* is the weight fraction of the first polyethylene fraction (meaning that 1 - x is conversely the weight fraction of the second polyethylene fraction.

**Density**

Density of the polymer was measured according to ISO 1183 and ISO1872-2 for sample preparation and is given in kg/m$^3$.

The density of the second polyethylene fraction (PE2) is not measured directly, but can be calculated by using the following mixing rule:

$$dens(PE2) = \frac{dens\ (PE) - x \times dens(PE1)}{1 - x}$$

Wherein dens(PE) is the density of the bimodal polyethylene,

dens(PE1) is the density of the first polyethylene fraction,
dens(PE2) is the density of the second polyethylene fraction, and
*x* is the weight fraction of the first polyethylene fraction (meaning that 1 - x is conversely the weight fraction of the second polyethylene fraction.

**Molecular weight averages, molecular weight distribution (Mn, Mw, Mz, MWD)**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i x\, M_i)}{\sum_{i=1}^{N} A_i} \quad (2)$$

$$M_z = \frac{\sum_{i=1}^{N}(A_i\, x\, M_i^2)}{\sum_{i=1}^{N}(A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with an IR5 from PolymerChar (Valencia, Spain) and with 3 x Agilent-PLgel Olexis and 1x Agilent-PLgel Olexis Guard columns was used. As solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using PolymerChar GPC-IR control software.

The column set was calibrated using universal calibration with 19 narrow MWD polystyrene (PS) standards in the range of 0.5 kg/mol to 11 500 kg/mol. The PS standards were dissolved at 160°C for 30 min. The conversion of the polystyrene peak molecular weight to polyolefin molecular weights is accomplished by using the Mark Houwink equation and the following Mark Houwink constants:

$$K_{PS} = 19 \text{ x } 10^{-3} \text{ mL/g}, \quad \alpha_{PS} = 0.655$$

$$K_{PE} = 39 \text{ x } 10^{-3} \text{ mL/g}, \quad \alpha_{PE} = 0.725$$

$$K_{PP} = 19 \text{ x } 10^{-3} \text{ mL/g}, \quad \alpha_{PP} = 0.725$$

A third order polynomial fit was used to fit the calibration data. The processing and integration of the peaks was done according to ISO 16014-1, meaning that in the low molecular weight region the elution of the last volume of the PS standard of 500 g/mol was chosen, when the polymer peak does not return to the baseline before the corresponded elution volume.

All samples were prepared in the concentration range of 0.5-1 mg/ml and dissolved at 160 °C for 2.5 hours for PP or 3 hours for PE under continuous gentle shaking.

**Comonomer contents:**

## Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S 1, S198). A total of 1024 (1k) transients were acquired per spectrum.

Quantitative $^{13}C\{^1H\}$ NMR spectra were processed, integrated and quantitative properties determined using custom spectral analysis automation programs. All chemical shifts are internally referenced to the bulk methylene signal (δ +) at 30.00 ppm (J. Randall, Macromol. Sci., Rev. Macromol. Chem. Phys. 1989, C29, 201).

Characteristic signals corresponding to the incorporation of 1-butene were observed (J. Randall, Macromol. Sci., Rev. Macromol. Chem. Phys. 1989, C29, 201.) and all contents calculated with respect to all other monomers present in the polymer with the limit of quantification being 0.2 mol-% of butene.

Characteristic signals resulting from isolated 1-butene incorporation i.e. EEBEE comonomer sequences, were observed. Isolated 1-butene incorporation was quantified using the integral of the signal at 39.8 ppm assigned to the $_*$B2 sites, accounting for the number of reporting sites per comonomer:

$$B = I_{*B2}$$

When characteristic signals resulting from consecutive 1-butene incorporation i.e. EBBE comonomer sequences were observed, such consecutive 1-butene incorporation was quantified using the integral of the signal at 39.3 ppm assigned to the ααB2B2 sites accounting for the number of reporting sites per comonomer:

$$BB = 2 * I_{\alpha\alpha B2B2}$$

When characteristic signals resulting from non consecutive 1-butene incorporation i.e. EBEBE comonomer sequences were also observed, such non-consecutive 1-butene incorporation was quantified using the integral of the signal at 24.7 ppm assigned to the ββB2B2 sites accounting for the number of reporting sites per comonomer:

$$BEB = 2 * I_{\beta\beta B2B2}$$

Due to the overlap of the *B2 and *βB2B2 sites of isolated (EEBEE) and non-consecutively incorporated (EBEBE) 1-butene respectively the total amount of isolated 1-butene incorporation is corrected based on the amount of non-consecutive 1-butene present:

$$B = I_{*B2} - 2 * I_{\beta\beta B2B2}$$

With no other signals indicative of other comonomer sequences, i.e. butene chain initiation, observed the total 1-butene comonomer content was calculated based solely on the amount of isolated (EEBEE), consecutive (EBBE) and non-consecutive (EBEBE) 1-butene comonomer sequences:

$$B_{total} = B + BB + BEB$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*( I_{2S} + I_{3S} )$$

The relative content of ethylene was quantified using the integral of the bulk methylene (δ+) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B + (7/2)*BB + (9/2)*BEB + (3/2)*S$$

The total mole fraction of 1-butene in the polymer was then calculated as:

$$fB = B_{total} / ( E_{total} + B_{total} )$$

The total comonomer incorporation of 1-butene in mole percent was calculated from the mole fraction in the usual manner:

$$B\ [mol\text{-}\%] = 100 * fB$$

The total comonomer incorporation of 1-butene in weight percent was calculated from the mole fraction in the standard manner:

$$B\ [wt.\text{-}\%] = 100 * ( fB * 56.11) / ( (fB * 56.11) + ((1 - fB) * 28.05) )$$

The comonomer content of the second polyethylene fraction (PE2) is not measured directly, but can be calculated by using the following mixing rule:

$$Co(PE2) = \frac{Co\ (PE) - \ x\ \times Co(PE1)}{1 - x}$$

Wherein Co(PE) is the comonomer content of the bimodal polyethylene, expressed in wt.-%,

Co(PE1) is the comonomer content of the first polyethylene fraction, expressed in wt.-%,
Co(PE2) is the comonomer content of the second polyethylene fraction, expressed in wt.-%, and
*x* is the weight fraction of the first polyethylene fraction (meaning that 1 - x is conversely the weight fraction of the second polyethylene fraction).

**DSC analysis, melting temperature ($T_m$) and crystallization temperature ($T_c$):** measured with a TA Instrument Q200 differential scanning calorimetry (DSC) on 5 to 7 mg samples. DSC is run according to ISO 11357 (2023) / part 3 /method C2 in a heat / cool / heat cycle with a scan rate of 10 °C/min in the temperature range of -30 to +225 °C. Crystallization temperature ($T_c$) and crystallization enthalpy ($H_c$) are determined from the cooling step, while melting temperature ($T_m$) and melting enthalpy ($H_m$) are determined from the second heating step.

## 2. Examples

### 2.1 Catalyst preparation for CAT1

*Loading of $SiO_2$:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt.-% MAO in toluene (14.1 kg) was added into another reactor from a balance followed by toluene (4.0 kg) at

25°C (oil circulation temp) and stirring with 95 rpm. Stirring speed was increased from 95 rpm -> 200 rpm after toluene addition, stirring time was 30 min. Metallocene Rac-dimethylsilanediylbis{2-(5-(trimethylsilyl)furan-2-yl)-4,5-dimethylcyclopentadien-1-yl} zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**2.2 Preparation of unimodal polyethylenes**

CE1 to CE11 were prepared in a single loop configuration (plus prepolymerization)

The catalyst CAT1 was prepolymerized in a loop reactor (i.e. prepolymerization reactor) having a volume of 50 $dm^3$, operated at a temperature and a pressure as indicated in Tables 1a and 1b. Into the reactor were fed CAT1, ethylene, propane diluent, 1-butene and hydrogen at the feed rates indicated in Tables 1a and 1b.

A stream of slurry was continuously withdrawn and directed to a loop reactor having a volume of 150 $dm^3$ and which was operated at a temperature °C and a pressure as indicated in Tables 1a and 1b. Into the reactor were further fed additional ethylene, 1-butene comonomer, propane diluent and hydrogen, so that the hydrogen to ethylene ratio and the 1-butene to ethylene ratio were as given in Tables 1a and 1b. The properties of the ethylene polymers withdrawn from the loop reactor had the properties given in Tables 1a and 1b.

**Table 1a** Successful unimodal polymerization conditions

| | | CE1 | CE2 | CE3 | CE4 | CE5 | CE6 | CE7 |
|---|---|---|---|---|---|---|---|---|
| **Prepolymerization (R0)** | | | | | | | | |
| Temperature | [°C] | 50 | 50 | 50 | 50 | 50 | 50 | 50 |
| CAT1 feed | [g/h] | 14.6 | 13.3 | 13.7 | 23.7 | 24.6 | 25.8 | 20.3 |
| Pressure | [kPa] | 5532 | 5537 | 5639 | 5530 | 5526 | 5544 | 5546 |
| C2 feed | [kg/h] | 2 | 2 | 2 | 2 | 2 | 2 | 2 |
| $H_2$ feed | [g/h] | 0 | 0 | 0.02 | 0.03 | 0 | 0 | 0 |
| C4 feed | [g/h] | 135.5 | 134.5 | 77.6 | 113.4 | 109.9 | 115.5 | 119.6 |
| Propane feed | [kg/h] | 56 | 56 | 49 | 48 | 54 | 55 | 56 |
| Split | [wt.-%] | 4.2 | 4.1 | 4.1 | 4.8 | 4.3 | 4.5 | 4.6 |
| **Loop (R1)** | | | | | | | | |
| Temperature | [°C] | 85 | 85 | 85 | 85 | 85 | 85 | 85 |
| Pressure | [kPa] | 5379 | 5378 | 5525 | 5388 | 5375 | 5383 | 5384 |
| H2/C2 ratio | [mol/kmol] | 0.20 | 0.19 | 0.36 | 1.1 | 1.3 | 2.3 | 2.3 |
| C4/C2 ratio | [mol/kmol] | 125 | 167 | 123 | 32 | 86 | 46 | 80 |
| Split | [wt.-%] | 95.8 | 95.9 | 95.9 | 95.2 | 95.7 | 95.5 | 95.4 |
| **Polymer properties** | | | | | | | | |
| iV | [dL/g] | 2.06 | 2.08 | 1.41 | 0.52 | 0.51 | 0.32 | 0.33 |
| C4 | [mol-%] | 2.20 | 2.80 | 2.30 | 0.55 | 1.37 | 0.56 | 0.88 |

(continued)

| Polymer properties | | | | | | | | |
|---|---|---|---|---|---|---|---|---|
| Dens | [kg/m³] | 921.9 | 918.2 | 925.3 | 957.8 | 946.2 | 963.7 | 957.4 |
| C4-iV | [-] | 0.14 | 0.72 | 0.89 | 0.03 | 0.86 | 0.24 | 0.55 |
| Dens+22*iV | [-] | 967.2 | 964.0 | 956.3 | 969.2 | 957.4 | 970.7 | 964.7 |
| Tm | [°C] | 115.1 | 112.1 | 116.2 | 126.9 | 122.3 | 126.3 | 124.2 |
| ΔHm | [J/g] | 131 | 123 | 139 | 212 | 188 | 227 | 215 |
| Tc | [°C] | 100.8 | 97.9 | 102.1 | 115.5 | 111.7 | 115.1 | 113.4 |
| Mn | [g/mol] | 24,700 | 25,900 | 19,450 | 6415 | 6675 | 3760 | 3870 |
| Mw | [g/mol] | 109,000 | 107,500 | 65,950 | 19,350 | 19,100 | 10,850 | 11,250 |
| Mz | [g/mol] | 207,000 | 207,500 | 125,000 | 46,550 | 42,750 | 32,550 | 43,750 |
| Mw/Mn | [-] | 4.41 | 4.15 | 3.39 | 3.02 | 2.86 | 2.89 | 2.91 |
| Mz/Mw | [-] | 1.90 | 1.93 | 1.90 | 2.41 | 2.24 | 3.00 | 3.89 |

In addition to CE1 to CE7, it was attempted to produce the following additional unimodal examples CE8 to CE11:

**Table 1b** Unsuccessful unimodal polymerization conditions

| | | CE8 | CE9 | CE10 | CE11 |
|---|---|---|---|---|---|
| **Prepolymerization (R0)** | | | | | |
| Temperature | [°C] | 50 | 50 | 50 | 50 |
| CAT1 feed | [g/h] | 13.3 | 10.2 | 21.0 | 19.1 |
| Pressure | [kPa] | 5537 | 5630 | 5541 | 5547 |
| C2 feed | [kg/h] | 2.0 | 2.0 | 2.0 | 2.0 |
| Hz feed | [g/h] | 0.0 | 0.03 | 0.0 | 0.0 |
| C4 feed | [g/h] | 135.7 | 77.6 | 119.8 | 134.9 |
| Propane feed | [kg/h] | 56 | 49 | 54 | 56 |
| Split | [wt.-%] | 4.1 | 4.1 | 4.2 | 4.5 |
| **Loop (R1)** | | | | | |
| Temperature | [°C] | 85 | 85 | 85 | 85 |
| Pressure | [kPa] | 5375 | 5527 | 5385 | 5386 |
| H2/C2 ratio | [mol/kmol] | 0.22 | 0.39 | 1.5 | 1.5 |
| C4/C2 ratio | [mol/kmol] | 223 | 160 | 140 | 150 |
| Split | [wt.-%] | 95.9 | 95.9 | 95.8 | 95.5 |
| **Polymer properties** | | | | | |
| iV | [dL/g] | 1.99 | 1.39 | 0.50 | 0.32 |
| C4 | [mol-%] | 3.60 | 2.60 | 1.95 | 1.54 |
| Dens | [kg/m³] | 913.7 | 922.7 | 939.1 | 949.2 |
| C4-iV | [-] | 1.61 | 1.21 | 1.45 | 1.22 |
| Dens+22*iV | [-] | 957.5 | 953.3 | 950.1 | 956.2 |

For each of CE8 to CE11, although it was initially possible to produce some polymer the polymerization conditions could not be maintained in a stable manner as process control variables, such as the pump energy fluctuated to such a degree that the reaction had to be stopped very quickly to avoid fouling the reactor. In contrast, CE1 to CE7 (and IE1 to IE2 -

see below) were produced via stable process conditions that could be maintained with negligible fluctuation for at least 2 hours.

As such, it can be seen that it is not possible to obtain polyethylenes having a higher "Co-iV" or a lower "dens+22*iV" in a stable manner whilst using a single loop reactor setup.

### 2.3 Preparation of bimodal polyethylenes

IE1 and IE2 were prepared in a double loop configuration (plus prepolymerization): The catalyst CAT1 was prepolymerized in a loop reactor (i.e. prepolymerization reactor) having a volume of 50 $dm^3$, operated at a temperature of 50 °C and a pressure of 5630 bar. Into the reactor were fed CAT1, ethylene, propane diluent, 1-butene and hydrogen at the feed rates indicated in Table 2.

A stream of slurry was continuously withdrawn from the prepolymerization reactor and directed to a loop reactor (first loop reactor) having a volume of 150 $dm^3$ and which was operated at a temperature and a pressure as indicated in Table 2. Into the reactor were further fed additional ethylene, 1-butene comonomer, propane diluent and hydrogen, so that the hydrogen to ethylene ratio and the 1-butene to ethylene ratio were as given in Table 2. The properties of the ethylene polymers produced in the loop reactor had the properties given in Table 2. These properties were measured by conducting analogous single loop polymerizations (i.e. same conditions without the second loop).

A stream of slurry was continuously withdrawn from the first loop reactor and directed to a loop reactor (second loop reactor) having a volume of 350 $dm^3$ and which was operated at a temperature and a pressure as indicated in Table 2. Into the reactor were further fed additional ethylene, 1-butene comonomer, propane diluent and hydrogen, so that the hydrogen to ethylene ratio and the 1-butene to ethylene ratio were as given in Table 2. The properties of the ethylene polymers withdrawn from the loop reactor had the properties given in Table 2.

| | | IE1 | IE2 |
|---|---|---|---|
| **Prepolymerization** | | | |
| Temperature | [°C] | 50 | 50 |
| CAT1 feed | [g/h] | 24.8 | 30.0 |
| Pressure | [kPa] | 5629 | 5635 |
| C2 feed | [kg/h] | 2.0 | 2.0 |
| $H_2$ feed | [g/h] | 0.0 | 0.0 |
| C4 feed | [g/h] | 81.4 | 80.0 |
| Propane feed | [kg/h] | 58 | 58 |
| Split | [wt.-%] | 4.1 | 4.1 |
| **Loop 1** | | | |
| Temperature | [°C] | 85 | 85 |
| Pressure | [kPa] | 5550 | 5550 |
| H2/C2 ratio | [mol/kmol] | 0.36 | 0.41 |
| C4/C2 ratio | [mol/kmol] | 12.8 | 12.5 |
| Split(PE 1+prepoly) | [wt.-%] | 49 | 49 |
| iV(PE1) | [dL/g] | 1.17 | 1.17 |
| Dens(PE1) | [kg/$m^3$] | 952.2 | 952.2 |
| C4(PE1) | [mol-%] | 0.33 | 0.33 |
| C4(PE1)-iV(PE1) | [-] | -0.84 | -0.84 |
| Dens(PE1)+22*iV(PE1) | [-] | 977.9 | 977.9 |
| **Loop 2** | | | |
| Temperature | [°C] | 85 | 85 |
| Pressure | [kPa] | 5420 | 5421 |

(continued)

| | | | |
|---|---|---|---|
| **Loop 2** | | | |
| H2/C2 ratio | [mol/kmol] | 1.5 | 2.3 |
| C4/C2 ratio | [mol/kmol] | 231.9 | 255.8 |
| Split(PE2) | [wt.-%] | 51 | 51 |
| iV(PE2) | [dL/g] | 0.50 | 0.39 |
| Dens(PE2) | [kg/m$^3$] | 937.1 | 939.6 |
| C4(PE2) | [mol-%] | 2.82 | 3.25 |
| C4(PE2)-iV(PE2) | [-] | 2.32 | 2.86 |
| Dens(PE2)+22*iV(PE2) | [-] | 948.1 | 948.2 |
| **Bimodal polymer properties** | | | |
| iV | [dL/g] | 0.83 | 0.77 |
| C4 | [mol-%] | 1.60 | 1.82 |
| Dens | [kg/m$^3$] | 944.5 | 945.8 |
| Tm | [°C] | 126.5 | 126.8 |
| ΔHm | [J/g] | 183 | 177 |
| Tc | [°C] | 115.0 | 115.3 |
| Mn | [g/mol] | 7065 | 5665 |
| Mw | [g/mol] | 35,500 | 31,300 |
| Mz | [g/mol] | 107,000 | 93,000 |
| Mw/Mn | [-] | 5.02 | 5.53 |
| Mz/Mw | [-] | 3.01 | 2.97 |

As can be seen, by utilizing a double-loop configuration, it is possible to produce polyethylene fractions having exceptionally high "Co-iV" and exceptionally low "dens+22*iV", providing access to polymers that are impossible to produce in a stable manner in a single reactor configuration. Without wishing to be bound by theory, the inventors believe that this is likely due to the polymerization in the second loop reactor taking place within the polymer matrix of the first polyethylene fraction, which may help to stabilize the second polyethylene fraction and prevent dissolution in the slurry.

## Claims

**1.** A polyethylene (PE) comprising:

a) a first polyethylene fraction (PE1) being a polymer of ethylene and optionally one or more comonomers selected from the group consisting of $C_3$-$C_8$ alpha olefins, and
b) a second polyethylene fraction (PE2) being a copolymer of ethylene and one or more comonomers selected from the group consisting of $C_3$-$C_8$ alpha olefins,
wherein the second polyethylene fraction (PE2) has an intrinsic viscosity value (iV), determined according to ISO 1628-1:2021 and ISO 1628-3:2010, in decalin at 135 °C, and a total comonomer content value (Co), determined according to quantitative $^{13}$C-NMR spectroscopic analysis, that fulfil inequation (I):

$$\boldsymbol{Co(PE2) - iV(PE2) \geq A} \qquad \text{(I)}$$

wherein the intrinsic viscosity (iV) is expressed in dL/g and the comonomer (Co) content is expressed in mol-%, and
wherein A is 1.00.

**2.** The polyethylene (PE) according to claim 1, wherein A is 1.50, more preferably 2.00, most preferably 2.30.

**3.** The polyethylene (PE) according to claim 1 or claim 2, wherein the second polyethylene fraction (PE2) has an intrinsic viscosity (iV), determined according to ISO 1628-1:2021 and ISO 1628-3:2010, in decalin at 135 °C, in the range from 0.10 to 0.70 dL/g, more preferably in the range from 0.10 to 0.60 dL/g, most preferably in the range from 0.10 to 0.55 dL/g.

**4.** The polyethylene (PE) according to any one of the preceding claims, wherein the second polyethylene fraction (PE2) has a total comonomer content value (Co), determined according to quantitative $^{13}$C-NMR spectroscopic analysis, in the range from 1.5 to 5.0 mol-%, more preferably in the range from 2.0 to 4.0 mol-%, most preferably in the range from 2.5 to 3.5 mol-%.

**5.** The polyethylene (PE) according to any one of the preceding claims, wherein the second polyethylene fraction (PE2) has a density, determined according to ISO 1183, in the range from 900 to 950 kg/m$^3$, more preferably in the range from 915 to 945 kg/m$^3$, most preferably in the range from 932 to 942 kg/m$^3$.

**6.** The polyethylene (PE) according to any one of the preceding claims, wherein the first polyethylene fraction (PE1) has an intrinsic viscosity value (iV), determined according to ISO 1628-1:2021 and ISO 1628-3:2010, in decalin at 135 °C, and comonomer content value (Co), determined according to quantitative $^{13}$C-NMR spectroscopic analysis, that fulfil inequation (II):

$$\boldsymbol{Co(PE1) - iV(PE1) < B} \qquad \text{(II)}$$

wherein the intrinsic viscosity (iV) is expressed in dL/g and the comonomer (Co) content is expressed in mol-%, and
wherein B is 1.00, more preferably 0.95, most preferably 0.90.

**7.** The polyethylene (PE) according to any one of the preceding claims, wherein the first polyethylene fraction (PE1) has one or more, preferably all, of the following properties:

a) an intrinsic viscosity (iV), determined according to ISO 1628-1:2021 and ISO 1628-3:2010, in decalin at 135 °C, in the range from 0.60 to 4.00 dL/g, more preferably in the range from 0.80 to 3.00 dL/g, most preferably in the range from 1.00 to 2.00 dL/g;
b) a total comonomer content value (Co), determined according to quantitative $^{13}$C-NMR spectroscopic analysis, in the range from 0.0 to 5.0 mol-%, more preferably in the range from 0.0 to 2.0 mol-%, most preferably in the range from 0.0 to 1.0 mol-%; and
c) a density, determined according to ISO 1183, in the range from 920 to 970 kg/m$^3$, more preferably in the range from 935 to 965 kg/m$^3$, most preferably in the range from 945 to 960 kg/m$^3$.

**8.** The polyethylene (PE) according to any one of the preceding claims, wherein the second polyethylene fraction (PE2) has an intrinsic viscosity value (iV), determined according to ISO 1628-1:2021 and ISO 1628-3:2010, in decalin at 135 °C, and a density value (dens), determined according to ISO 1183, that fulfil inequation (III)

$$\boldsymbol{dens(PE2) + 22 \times iV(PE2) \leq C} \qquad \text{(III)}$$

wherein the intrinsic viscosity (iV) is expressed in dL/g and the density is expressed in kg/m$^3$, and
wherein C is 955.0, more preferably 954.0, yet more preferably 953.0, even more preferably 952.0, yet further preferably 951.0, even further preferably 950.0, most preferably 949.0; and
wherein the first polyethylene fraction (PE1) has an intrinsic viscosity value (iV), determined according to ISO 1628-1:2021 and ISO 1628-3:2010, in decalin at 135 °C, and a density value (dens), determined according to ISO 1183, that fulfil inequation (IV)

$$\boldsymbol{dens(PE1) + 22 \times iV(PE1) > D} \qquad \text{(IV)}$$

wherein the intrinsic viscosity (iV) is expressed in dL/g and the density is expressed in kg/m$^3$, and
wherein D is 955.0, more preferably 955.5, most preferably 956.0.

**9.** The polyethylene (PE) according to any one of the preceding claims, wherein the first polyethylene fraction (PE1) is present in an amount in the range from 30 to 70 wt.-% and the second polyethylene fraction (PE2) is present in an amount in the range from 30 to 70 wt.-%, both relative to the total weight of the polyethylene (PE), more preferably wherein the first polyethylene fraction (PE1) is present in an amount in the range from 40 to 60 wt.-% and the second polyethylene fraction (PE2) is present in an amount in the range from 40 to 60 wt.-%, most preferably wherein the first polyethylene fraction (PE1) is present in an amount in the range from 45 to 55 wt.-% and the second polyethylene fraction (PE2) is present in an amount in the range from 45 to 55 wt.-%.

**10.** The polyethylene (PE) according to any one of the preceding claims, wherein the first polyethylene fraction (PE1) is a copolymer of ethylene and a first comonomer selected from the group consisting of $C_3$-$C_8$ alpha olefins and the second polyethylene fraction (PE2) is a copolymer of ethylene and a second comonomer selected from the group consisting of $C_3$-$C_8$ alpha olefins, wherein the first comonomer and the second comonomer are preferably the same, yet more preferably are either both 1-butene or 1-hexene, most preferably are both 1-butene.

**11.** The polyethylene (PE) according to any one of the preceding claims, having one or more, preferably all, of the following properties:

a) an intrinsic viscosity (iV), determined according to ISO 1628-1:2021 and ISO 1628-3:2010, in decalin at 135 °C, in the range from 0.10 to 1.50 dL/g, more preferably in the range from 0.20 to 1.00 dL/g, most preferably in the range from 0.70 to 0.90 dL/g; and
b) a total comonomer content value (Co), determined according to quantitative $^{13}C$-NMR spectroscopic analysis, in the range from 0.5 to 5.0 mol-%, more preferably in the range from 1.0 to 3.0 mol-%, most preferably in the range from 1.2 to 2.2 mol-%; and
c) a density, determined according to ISO 1183, in the range from 900 to 960 kg/m$^3$, more preferably in the range from 920 to 955 kg/m$^3$, most preferably in the range from 940 to 950 kg/m$^3$.

**12.** A process for producing the polyethylene (PE) according to any one of the preceding claims, comprising, in the given order, the following steps:

a) providing a single site catalyst (SSC);
b) optionally prepolymerizing the single site catalyst (SSC) in the presence of ethylene and optionally one or more comonomers selected from the group consisting of $C_3$-$C_8$ alpha olefins in a prepolymerization reactor (R0), thereby producing a prepolymerized single site catalyst (SSC);
c) in the presence of the optionally prepolymerized single site catalyst (SSC), polymerizing ethylene and optionally one or more comonomers selected from the group consisting of $C_3$-$C_8$ alpha olefins in a first polymerization reactor (R1), thereby producing the first polyethylene fraction (PE1); and
d) in the presence of the optionally prepolymerized single site catalyst (SSC) and the first polyethylene fraction (PE1), polymerizing ethylene and one or more comonomers selected from the group consisting of $C_3$-$C_8$ alpha olefins in a second polymerization reactor (R2), thereby producing the second polyethylene fraction (PE2);
e) optionally, in the presence of the optionally prepolymerized single site catalyst (SSC), the first polyethylene fraction (PE1) and the second polyethylene fraction (PE2) polymerizing ethylene and one or more comonomers selected from the group consisting of $C_3$-$C_8$ alpha olefins in one or more further polymerization reactors thereby producing one or more further polyethylene fractions; and
f) compounding the resultant mixture of the optionally prepolymerized single site catalyst (SSC), the first polyethylene fraction (PE1), the second polyethylene fraction (PE2) and the optional further polyethylene fractions, optionally with one or more additives (Ad), thereby obtaining the polyethylene (PE),

wherein the first polymerization reactor (R1) and the second polymerization reactor (R2) are both slurry reactors, more preferably both loop reactors.

**13.** The process according to claim 12, wherein the single site catalyst (SSC) comprises a metallocene complex (C) and a cocatalyst, wherein the metallocene complex (C) has a structure according to formula (I):

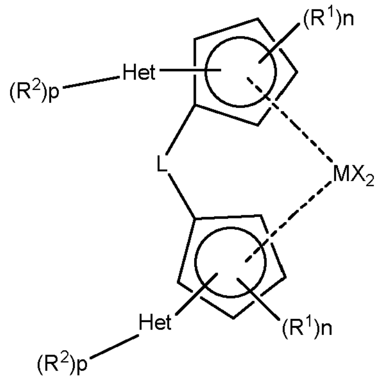

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group; each n is 1 to 2;
each $R^2$ is the same or different and is a $C_{1-6}$-alkyl group, $C_{1-6}$-alkoxy group or - $Si(R)_3$ group;
each R is $C_{1-10}$-alkyl or phenyl group optionally substituted by 1 to 3 $C_{1-6}$-alkyl groups; and
each p is 0 to 1.

**14.** The polyethylene (PE) according to any one of claims 1 to 11, being obtainable, more preferably obtained, according to the process of claim 12 or claim 13.

**15.** A polymer composition (PC) comprising at least 75 wt.-%, relative to the total weight of the polymer composition (PC), of the polyethylene (PE) according to any one of claims 1 to 11 or 14.

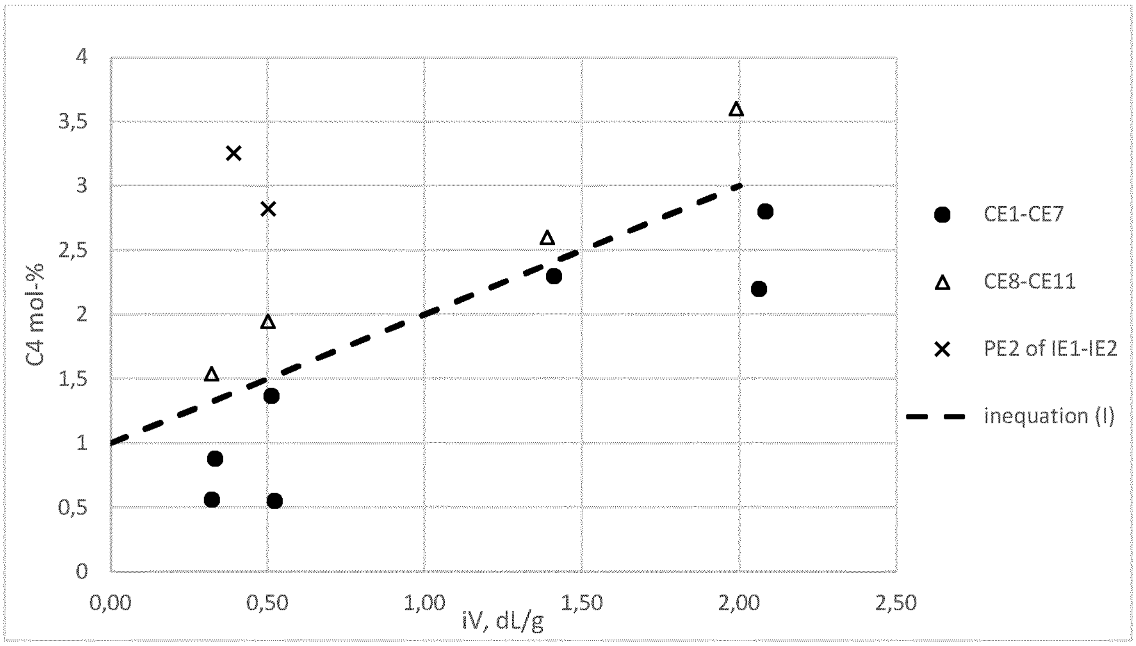


**Figure 1** comonomer content vs intrinsic viscosity

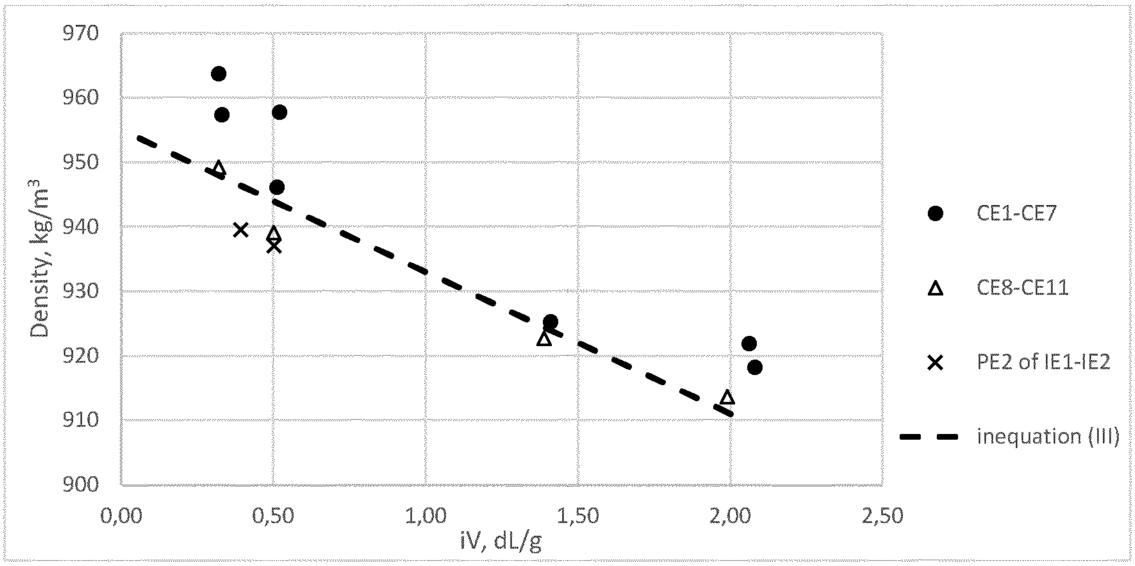


**Figure 2** density vs intrinsic viscosity

Europäisches Patentamt
European Patent Office
Office européen des brevets

# EUROPEAN SEARCH REPORT

Application Number
EP 25 15 4918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/153213 A1 (BOREALIS AG [AT]; GREIN CHRISTELLE [AT]; BERNREITER KLAUS [AT]) 23 December 2009 (2009-12-23) * claim 1 * | 1,2 | INV. C08F210/16 C08F4/659 C08L23/0807 |
| X | EP 0 575 123 A2 (MITSUI PETROCHEMICAL IND [JP]) 22 December 1993 (1993-12-22) * examples of tables 10, 11, 23, 24; table 24 * | 1-11,14, 15 | |
| X | WO 2023/012254 A1 (BOREALIS AG [AT]) 9 February 2023 (2023-02-09) * example IE1; tables 1, 2 * | 1 | |
| X | WO 2024/068977 A1 (BOREALIS AG [AT]) 4 April 2024 (2024-04-04) * example IE1; tables 1, 2 * | 1,12,13 | |

TECHNICAL FIELDS SEARCHED (IPC)

C08F
C08L

The present search report has been drawn up for all claims

| Place of search | Date of completion of the search | Examiner |
|---|---|---|
| Munich | 10 July 2025 | Bernhardt, Max |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 15 4918

This annex lists the patent family members relating to the patent documents cited in the above-mentioned European search report. The members are as contained in the European Patent Office EDP file on
The European Patent Office is in no way liable for these particulars which are merely given for the purpose of information.

10-07-2025

| Patent document cited in search report | Publication date | Patent family member(s) | Publication date |
|---|---|---|---|
| WO 2009153213 A1 | 23-12-2009 | BR PI0914791 A2 | 20-10-2015 |
| | | CN 102066478 A | 18-05-2011 |
| | | EP 2294129 A1 | 16-03-2011 |
| | | ES 2447571 T3 | 12-03-2014 |
| | | RU 2010150857 A | 27-07-2012 |
| | | US 2011086970 A1 | 14-04-2011 |
| | | US 2014045994 A1 | 13-02-2014 |
| | | WO 2009153213 A1 | 23-12-2009 |
| EP 0575123 A2 | 22-12-1993 | CA 2098539 A1 | 18-12-1993 |
| | | DE 69329313 T2 | 22-02-2001 |
| | | EP 0575123 A2 | 22-12-1993 |
| | | KR 940005741 A | 22-03-1994 |
| | | US 5594071 A | 14-01-1997 |
| | | US 5674945 A | 07-10-1997 |
| | | US 2002165322 A1 | 07-11-2002 |
| | | US 2003092845 A1 | 15-05-2003 |
| | | US 2004210004 A1 | 21-10-2004 |
| WO 2023012254 A1 | 09-02-2023 | CN 117794963 A | 29-03-2024 |
| | | EP 4380988 A1 | 12-06-2024 |
| | | US 2024336714 A1 | 10-10-2024 |
| | | WO 2023012254 A1 | 09-02-2023 |
| WO 2024068977 A1 | 04-04-2024 | CN 119968430 A | 09-05-2025 |
| | | EP 4344869 A1 | 03-04-2024 |
| | | WO 2024068977 A1 | 04-04-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45 (1), 198
- **J. RANDALL**. Macromol. Sci.. *Rev. Macromol. Chem. Phys.*, 1989, vol. 29, 201